# EUROPÄISCHE PATENTSCHRIFT

(11) **EP 3 610 169 B1**
(45) Veröffentlichungstag und Bekanntmachung des Hinweises auf die Patenterteilung: **16.03.2022**
(21) Anmeldenummer: 18711033.3
(22) Anmeldetag: 05.03.2018
(51) Int. Cl.: F16D 25/0638, F16D 25/12

(54) **NASSLAUFENDE KUPPLUNGSANORDNUNG**
WET RUNNING CLUTCH ARRANGEMENT
SYSTÈME D'EMBRAYAGE HUMIDE

(30) Priorität: 11.04.2017 DE 102017206150; 06.02.2018 DE 102018201779
(43) Veröffentlichungstag der Anmeldung: 19.02.2020
(73) Patentinhaber: ZF Friedrichshafen AG, 88046 Friedrichshafen (DE)
(72) Erfinder: GROSSPIETSCH, Wolfgang, 97422 Schweinfurt (DE); SIBLA, Christian, 88097 Eriskirch (DE); BARTELS, Ernst, 97469 Gochsheim (DE); STROPH, Stephan, 88069 Tettnang (DE); SCHMIDT, Stefan, 88048 Friedrichshafen (DE); GIESENKIRCHEN, Willi, 88213 Ravensburg (DE); HERRMANN, Markus, 88175 Scheidegg (DE); KAUFMANN, Martin, 88048 Friedrichshafen (DE); ORLAMÜNDER, Andreas, 97453 Schonungen (DE); GUTMANN, Patrick, 88090 Immenstaad (DE); KNEUER, Michael, 97532 Üchtelhausen (DE); FREY, Peter, 97447 Gerolzhofen (DE); RATTE, Andreas, 97456 Dittelbrunn (DE); SCHNEIDER, Christian, 97762 Hammelburg (DE); SCHRÖDER, Arthur, 97456 Dittelbrunn (DE)
(74) Vertreter: ZF Friedrichshafen AG
(86) Internationale Anmeldenummer: PCT/EP2018/055244
(87) Internationale Veröffentlichungsnummer: WO 2018/188850

(56) Entgegenhaltungen:
- EP-A1- 2 546 547
- WO-A1-2016/067538
- DE-A1-102008 042 125
- DE-A1-102011 005 724

## Beschreibung

Die Erfindung betrifft eine nasslaufende Kupplungsanordnung, umfassend eine um eine Zentralachse drehbare Kupplungseinrichtung, die eine antriebsseitige Kupplungseinheit mit zumindest einem antriebsseitigen Kupplungselement, eine mit einem Abtrieb drehfeste abtriebsseitige Kupplungseinheit mit zumindest einem Kupplungselement und eine Anpresseinrichtung aufweist, wobei die antriebsseitige Kupplungseinheit einen zur Aufnahme der Kupplungselemente vorgesehenen Torusraum, einen zur Beaufschlagung einer Seite der Anpresseinrichtung dienenden, durch zumindest eine Wandung der antriebsseitigen Kupplungseinheit und durch die Anpresseinrichtung begrenzten Druckraum und einen der Gegenseite der Anpresseinrichtung zugeordneten und durch eine gegenüber dem Torusraum wirksame Trennwandung gebildeten Fliehkraftausgleichsraum aufweist, und die Räume zumindest im Wesentlichen gegeneinander abgedichtet sind.

Eine derartige Kupplungsanordnung ist der DE 10 2008 042 125 A1 zu entnehmen. Die Anpresseinrichtung ist ebenso wie die Trennwandung auf einer antriebsseitigen Eingangsnabe eines als antriebsseitige Kupplungseinheit dienenden Gehäuses angeordnet, wobei die Anpresseinrichtung gegenüber dieser antriebsseitigen Eingangsnabe sowohl in Umfangsrichtung als auch in Erstreckungsrichtung der Zentralachse verlagerbar ist. In der antriebsseitigen Eingangsnabe ist ein Druckmittelaustausch für den Druckraum vorgesehen, während eine axial zwischen der antriebsseitigen Eingangsnabe und einer abtriebsseitigen Ausgangsnabe vorgesehene Zwischennabe einen Druckmittelaustausch für den Torusraum aufweist. Der sowohl gegenüber dem Druckraum als auch gegenüber dem Torusraum zumindest im Wesentlichen abgedichtete Fliehkraftausgleichsraum ist ebenfalls mit Druckmittel zumindest im Wesentlichen befüllt. Für alle Räume gilt gleichermaßen, dass das jeweils enthaltene Druckmittel bei Drehung des Gehäuses um die Zentralachse fliehkraftbedingt nach radial außen drängt, was in Druckraum und Fliehkraftausgleichsraum jeweils zu einer Änderung der auf die Anpresseinrichtung einwirkenden Axialkraft führt. Gelingt es hierbei durch den Fliehkraftausgleichsraum nur teilweise, die fliehkraftbedingte Axialkraft im Druckraum zu kompensieren, besteht das Risiko, dass die Anpresseinrichtung in Richtung zum Fliehkraftausgleichsraum verlagert wird und dort durch Aufbau einer unerwünschten Momentenübertragung reibungsbedingte Verluste erzeugt, obwohl im Druckraum noch kein Einrückdruck aufgebaut ist. Liegt dagegen eine Überkompensation der im Druckraum aufgebauten fliehkraftbedingten Axialkraft vor, dann muss zum Einrücken der Kupplungseinrichtung ein unverhältnismäßig hoher Druck im Druckraum aufgebaut werden, was sich auf den Wirkungsgrad der Kupplungsanordnung negativ auswirkt. Eine derartige Überkompensation ist beispielsweise dann zu erwarten, wenn ein entgegen der Ausrückrichtung der Anpresseinrichtung wirksamer Axialenergiespeicher vorgesehen ist. Bei der vorliegenden DE 10 2008 042 125 A1 ist dieser Axialenergiespeicher durch die den Fliehkraftausgleichsraum begrenzende Trennwandung gebildet. Aber selbst dann, wenn die Kompensation der fliehkraftbedingten Axialkraft im Druckraum sehr gut gelingt, können sich Druckschwankungen im Druckraum im Hinblick auf die Anpresskrafterzeugung der Anpresseinrichtung in unerwünschter Weise bemerkbar machen, wobei ein Fliehkraftausgleichsraum, wie er bei der vorliegenden DE 10 2008 042 125 A1 zur Verfügung steht, keine Möglichkeit eröffnet, derartigen Druckschwankungen entgegen zu wirken.

Ferner offenbart DE 10 2011 005724 A1 ein Getriebe mit einer nasslaufenden Kupplungsanordnung, wobei ein Druckmittelaustausch für den Fliehkraftausgleichsraum den Fliehkraftausgleichsraum mit dem Torusraum verbindet, und eine Druckmittelentlastung für den Fliehkraftausgleichsraum den Fliehkraftausgleichsraum mit einem ersten Durchgang verbindet, während dem Torusraum weiterhin ein zweiter Durchgang zugeordnet ist.

Außerdem zeigt EP 2 546 547 A1 ein ähnliches Getriebe mit einer nasslaufenden Kupplungsanordnung.

Der Erfindung liegt die Aufgabe zugrunde, einen Fliehkraftausgleichsraum derart auszubilden, dass zum einen fliehkraftbedingte Axialkräfte und zum anderen Druckschwankungen jeweils in einem Druckraum zumindest im Wesentlichen kompensiert werden können.

Zur Lösung dieser Aufgabe ist ein Getriebe nach Anspruch 1 vorgesehen.

Insbesondere ist vorgesehen, dass ein Druckmittelaustausch für den Fliehkraftausgleichsraum den Fliehkraftausgleichsraum mit dem Torusraum verbindet, und eine Druckmittelentlastung für den Fliehkraftausgleichsraum den Fliehkraftausgleichsraum mit einem ersten Durchgang verbindet, während dem Torusraum weiterhin ein zweiter Durchgang zugeordnet ist.

Ein durch eine Anpresseinrichtung von einem Druckraum getrennter Fliehkraftausgleichsraum ist besonders effizient, wenn die den Fliehkraftausgleichsraum begrenzenden Bauteile, wie die Anpresseinrichtung und die Trennwandung mit der gleichen Drehzahl bewegt werden wie die den Druckraum begrenzenden Bauteile, wie beispielsweise eine mit der Anpresseinrichtung zusammenwirkende Wandung der antriebsseitigen Kupplungseinheit. Da die Wandung der antriebsseitigen Kupplungseinheit mit Antriebsdrehzahl bewegt wird, rotieren auch die Anpresseinrichtung sowie die Trennwandung zumindest im Wesentlichen mit Antriebsdrehzahl, so dass bei jeweils mit Druckmittel befülltem Druck- und Fliehkraftausgleichsraum das Druckmittel in beiden Räumen unter jeweils vergleichbarer Fliehkraftbelastung nach radial außen verdrängt wird, und sich beidseits der Anpresseinrichtung jeweils vergleichbare Druckbedingungen einstellen. Die Anpresseinrichtung ist dann zumindest im Wesentlichen frei von fliehkraftbedingter Axialkraftbelastung, so dass allein der im Druckraum aufgebaute Druck in Bezug zu dem im Fliehkraftausgleichsraum anliegenden Druck für die jeweilige Position der Anpresseinrichtung entscheidend ist.

Die Befüllung des Fliehkraftausgleichsraums erfolgt zumindest im Wesentlichen aus dem Torusraum über den Druckmittelaustausch. Da dem Torusraum weiterhin ein zweiter Durchgang zugeordnet ist, wird der den Torusraum verlassende Druckmittelstrom den Druckmittelaustausch für den Fliehkraftausgleichsraum zum einen und dem zweiten Durchgang zum anderen zugeleitet. Die Aufteilung des den Torusraum verlassenden Druckmittelstromes erfolgt hierbei entsprechend der Auslegung des Druckmittelaustauschs für den Fliehkraftausgleichsraum. Ein größerer Durchflussquerschnitt des Druckmittelaustauschs hat einen stärkeren Druckmittelstrom in den Fliehkraftausgleichsraum zur Folge, ein geringerer Durchflussquerschnitt des Druckmittelaustauschs dagegen einen stärkeren Druckmittelstrom zum zweiten Durchgang.

Ein über den Druckmittelaustausch in den Fliehkraftausgleichsraum eingeleiteter Druckmittelstrom wird sich bei Rotation der Kupplungseinrichtung um die Zentralachse fliehkraftbedingt nach radial außen verlagern, und hierbei Druckmittel, das bereits im Fliehkraftausgleichsraum enthalten ist, sowie im Druckmittel enthaltene Gas- oder Luftbläschen, die in Stillstandszeiten eingetreten sein können, nach radial innen verdrängen. Dort trifft das verdrängte Druckmittel auf die Druckmittelentlastung für den Fliehkraftausgleichsraum, um über diese Druckmittelentlastung den Fliehkraftausgleichsraum zu verlassen und dem ersten Durchgang der antriebsseitigen Kupplungseinheit zuströmen zu können. Über den Druckmittelaustausch in den Fliehkraftausgleichsraum nachströmendes Druckmittel wird dadurch den Druck im Fliehkraftausgleichsraum nur innerhalb eines begrenzten Bereiches beeinflussen können. Es herrschen demnach zumindest im Wesentlichen konstante vorbestimmte Druckbedingungen im Fliehkraftausgleichsraum.

Da der über den Druckmittelaustausch in den Fliehkraftausgleichsraum eingeleitete Druckmittelstrom sich bei Rotation der Kupplungseinrichtung um die Zentralachse fliehkraftbedingt nach radial außen verlagern wird, bietet es sich an, dass der Druckmittelaustausch radial innerhalb des Fliehkraftausgleichsraumes vorgesehen ist. Da das bereits im Fliehkraftausgleichsraum enthaltene Druckmittel und leichte Inhaltsstoffe, wie Druckmittel mit Gas- oder Luftbläschen auszentrifugiert, also nach innen verlagert werden, und durch den neu eingeleiteten Druckmittelstrom nach radial innen verdrängt wird, bietet es sich weiterhin an, die Druckmittelentlastung für den Fliehkraftausgleichsraum ebenfalls radial innerhalb des Fliehkraftausgleichsraumes zu positionieren, damit verdrängtes Druckmittel möglichst umlenkungsfrei in die Druckmittelentlastung eintreten kann. Aus diesem Grund ist eine gegenüber der antriebsseitigen Kupplungseinheit drehfeste oder als Teil der antriebsseitigen Kupplungseinheit vorgesehene, eine weitere Begrenzung des Ausgleichsraumes bildende Baueinheit, wie beispielsweise eine antriebsseitige Eingangsnabe, radial innerhalb des Fliehkraftausgleichsraumes vorgesehen, und dient sowohl zur Aufnahme des Druckmittelaustauschs für den Fliehkraftausgleichsraum als auch zur Aufnahme der Druckmittelentlastung für den Fliehkraftausgleichsraum.

Der Druckmittelaustausch für den Fliehkraftausgleichsraum ist in Relation zur Druckmittelentlastung für den Fliehkraftausgleichsraum mit geringerem Durchflussquerschnitt versehen. Dadurch ist auch bei relativ starker Druckmittelströmung aus dem Torusraum in den Fliehkraftausgleichsraum sichergestellt, dass der im Fliehkraftausgleichsraum herrschende Druck einen vorbestimmten Druck nicht übersteigt. Trotz des gegenüber des Druckmittelaustauschs größeren Durchflussquerschnittes der Druckmittelentlastung ist im Fliehkraftausgleichsraum bei Rotation der Kupplungseinrichtung um die Zentralachse eine hinreichende Befüllung sichergestellt, da wegen der Fliehkraftwirkung lediglich dann Druckmittel nach radial innen verdrängt wird, wenn ein entsprechender Druckmittelüberschuss im Fliehkraftausgleichsraum vorliegt.

Da das Druckmittel im Fliehkraftausgleichsraum unter Fliehkrafteinfluss nach radial außen gefördert wird, ist es vorteilhaft, den Druckmittelaustausch für den Fliehkraftausgleichsraum mit wenigstens einem Strömungskanal auszubilden, der zumindest im Wesentlichen mit einer Erstreckungsrichtung nach radial außen verläuft, und daher mit einer Erstreckungsrichtung zumindest im Wesentlichen senkrecht zur Zentralachse der Kupplungseinrichtung. Die Druckmittelentlastung für den Fliehkraftausgleichsraum kann dagegen mit wenigstens einem Strömungskanal versehen sein, dessen Erstreckungsrichtung zugunsten kompakter Bauweise des die Druckmittelentlastung aufnehmenden Bauteil, wie einer antriebsseitigen Eingangsnabe, zumindest im Wesentlichen ohne Radialkomponente und daher zumindest im Wesentlichen parallel zur Zentralachse der Kupplungseinrichtung verläuft.

Erfindungsgemäß wird das Druckmittel nach Verlassen des Fliehkraftausgleichsraums über einen ersten Durchgang ebenso einer weiteren Verwendung zugeführt. So wird das den ersten Durchgang verlassende Druckmittel einem ersten Gehäuseabschnitt eines Getriebes, wie eines Mehrstufengetriebes, zugeführt, um dort zur Schmierung und/oder zur Kühlung von Komponenten eines Antriebsstranges, wie eines Tilgersystems und/oder einer Elektromaschine genutzt zu werden. Ebenso kann das den zweiten Durchgang verlassende Druckmittel einem zweiten Gehäuseabschnitt des Getriebes zugeführt werden, um dort zur Kühlung in einen Wärmetauscher oder in einen Druckmittelvorrat zu gelangen.

Dem Fliehkraftausgleichsraum kann eine axial zwischen der Anpresseinrichtung und der Trennwandung wirksame Axialenergiespeichereinheit zugeordnet sein, welche entgegen der vom Druckraum auf die Anpresseinrichtung ausgeübten Axialkraft wirksam ist, und damit in ausgerücktem Zustand der Kupplungseinrichtung eine sichere Abtrennung der Anpresseinrichtung von den Kupplungselementen der Kupplungseinheiten bewirkt. Reibungsbedingte Verluste können dadurch ebenso wie Schleppverluste nachhaltig ausgeschlossen werden.

Durch die Maßnahme, zwei einer Axialvorsprung der Anpresseinrichtung zugeordnete Abdichtungen auf zumindest annähernd gleichem Radius vorzusehen, wird erreicht, dass Druckschwankungen innerhalb des Torusraums von einer Übertragung auf die der Anpresseinrichtung über den Beaufschlagungsbereich der Anpresseinrichtung mit im Torusraum vorgesehenen Kupplungselementen abgehalten werden. Während die erste Abdichtung die Anpresseinrichtung zur Bildung des Druckraums gegenüber dem Gehäuse abdichtet, ist die zweite Abdichtung zur Isolierung der Anpresseinrichtung gegenüber der Trennwandung des Fliehkraftausgleichsraumes wirksam. Bei einer vorzugsweisen Ausführung ist die erste Abdichtung radial außerhalb der Anpresseinrichtung vorgesehen, die zweite Abdichtung dagegen radial innerhalb der Anpresseinrichtung. Um dennoch beide Abdichtungen auf zumindest annähernd gleichem Radius aufnehmen zu können, ist die Anpresseinrichtung vorzugsweise mit einer Radialstufe axial zwischen den beiden Abdichtungen ausgebildet. Entspricht die Wirkfläche der Radialstufe der Anpresseinrichtung zumindest im Wesentlichen der Wirkfläche des Beaufschlagungsbereiches der Anpresseinrichtung gegenüber den Kupplungselementen, dann ist aufgrund der Anordnung beider Wirkflächen innerhalb des gleichen Raums, nämlich des Torusraums, und damit aufgrund zumindest im Wesentlichen gleicher Druckbedingungen davon auszugehen, dass beide Wirkflächen sich in Achsrichtung gegenseitig kompensieren, und damit die Anpresseinrichtung auch bei Druckschwankungen im Torusraum keine undefinierte unerwünschte Axialverlagerung vollzieht.

Die Erfindung ist nachfolgend anhand von Ausführungsbeispielen näher erläutert. Es zeigt:
Fig. 1 einen Längsschnitt durch ein Getriebe mit einem Torsionsschwingungsdämpfer, einem Tilgersystem, einer nasslaufenden Kupplungsanordnung und einer Elektromaschine in dem Getriebegehäuse des Getriebes;
Fig. 2 eine vergrößerte Herauszeichnung der Kupplungsanordnung;
Fig. 3 wie Fig. 2, aber mit Darstellung des Strömungsverlaufs einer zwischen einem Torusraum und einem Fliehkraftausgleichsraum der Kupplungsanordnung mittels eines Druckmittelaustauschs für den Fliehkraftausgleichsraum verlaufenden Strömungsverbindung;
Fig. 4 wie Fig. 2, aber mit Darstellung des Strömungsverlaufs entlang einer zwischen dem Fliehkraftausgleichsraum der Kupplungsanordnung und einem Gehäuseausgang des Getriebes mittels einer Druckmittelentlastung für den Fliehkraftausgleichsraum verlaufenden Strömungsverbindung;
Fig. 5 einen Ausschnitt, der eine Anpresseinrichtung der Kupplungsanordnung mit einer Radialstufe an einem Axialvorsprung der Anpresseinrichtung zwischen zwei Abdichtungen zeigt.

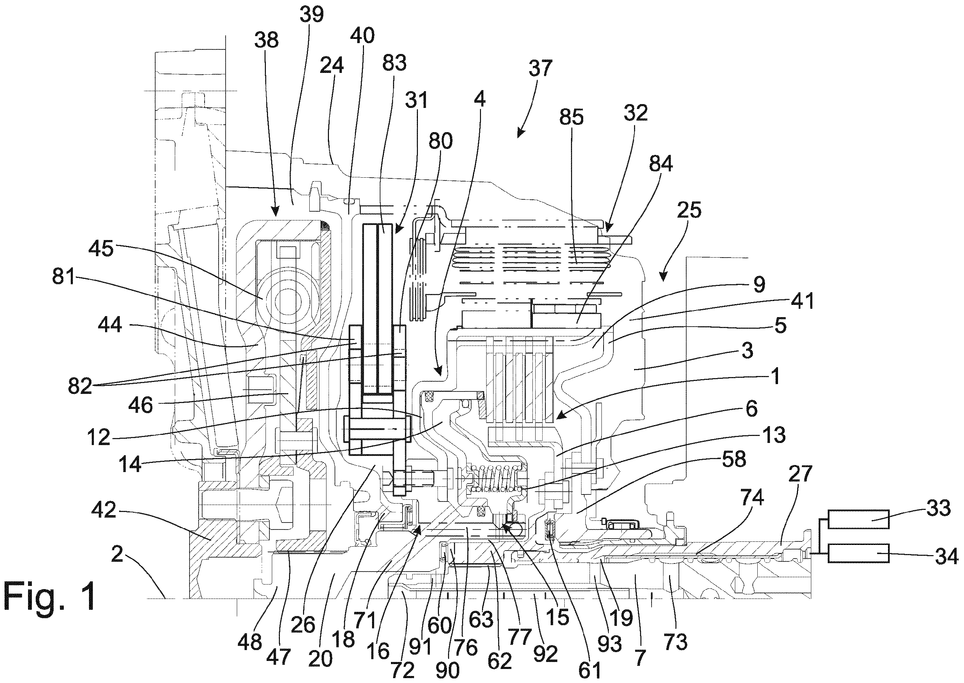

Der in Fig. 1 gezeigte Bereich eines Antriebsstranges 37 zeigt ein Getriebe 25 mit einem Getriebegehäuse 24, welches zur Aufnahme eines Torsionsschwingungsdämpfers 38 in einem Trockenraum 39 und eines Tilgersystems 31, einer nasslaufenden Kupplungsanordnung 1 und einer Elektromaschine 32 in einem vom Trockenraum 39 mittels einer getriebefesten Abtrennung 40 isolierten Nassraum 41 vorgesehen ist. Die zuvor genannten Baueinheiten, insbesondere hierbei die Kupplungsanordnung 1, sind um eine Zentralachse 2 rotierbar.

Der Torsionsschwingungsdämpfer 38 ist mittels eines Eingangsteils 44 an einem Antrieb 42, wie der Kurbelwelle einer Brennkraftmaschine, befestigt. Der Eingangsteil 44 ist über eine mit Energiespeichern versehene Dämpfungseinrichtung 45 mit einem Ausgangsteil 46 verbunden, das mittels einer Verzahnung 47 mit einer Baueinheit 20 drehfest verbunden ist. Die Baueinheit 20 ist mit einer antriebsseitigen Kupplungseinheit 5 der Kupplungsanordnung 1 drehfest verbunden, und dient als antriebsseitige Eingangsnabe 48 dieser antriebsseitigen Kupplungseinheit 5. Des Weiteren ist die Baueinheit 20 mit einem Tilgermassenträgerelement 80 des Tilgersystems 31 drehfest verbunden, wobei dieses Tilgermassenträgerelement 80 zusammen mit einem weiteren Tilgermassenträgerelement 81 einen Tilgermassenträger 82 bildet. Axial zwischen den beiden Tilgermassenträgerelementen 80 und 81 sind Tilgermassen 83 relativ zu den Tilgermassenträgerelementen 80 und 81 bewegbar aufgenommen.

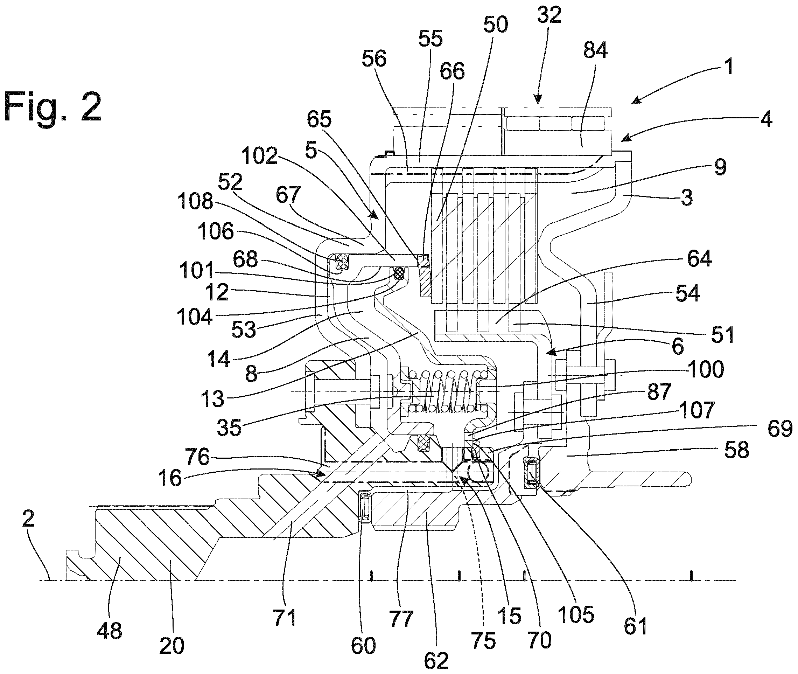

Wie aus Fig. 2 besser zu erkennen ist, verfügt die antriebsseitige Kupplungseinheit 5 über eine antriebsseitige Wandung 53, welche im radial mittleren Bereich mittels einer Axialerstreckung 52 einen Führungsbereich 67 für eine auf der Baueinheit 20 axial verlagerbar und drehbar angeordnete Anpresseinrichtung 8 bildet. Die Anpresseinrichtung 8 ist sowohl gegenüber der Axialerstreckung 52 der antriebsseitigen Kupplungseinheit 5 als auch gegenüber der Baueinheit 20 jeweils abgedichtet angeordnet.

Die antriebsseitige Kupplungseinheit 5 verfügt über eine radial äußere Wandung 55, die über eine Verzahnung 56 mit antriebsseitigen Kupplungselementen 50 drehfest verbunden ist. Die radial äußere Wandung 55 geht abtriebsseitig in eine abtriebsseitige Wandung 54 der antriebsseitigen Kupplungseinheit 5 über, wobei diese abtriebsseitige Wandung 54 radial innen mit einer abtriebsseitigen Ausgangsnabe 58 drehfest verbunden ist.

Durch die Wandungen 53, 54 und 55 ist die antriebsseitige Kupplungseinheit 5 als Gehäuse 3 ausgebildet. An der radialen Außenseite trägt dieses Gehäuse 3 und damit die antriebsseitige Kupplungseinheit 5 einen Rotor 84 der Elektromaschine 32, der wiederum von einem Stator 85 (Fig. 1) der Elektromaschine 32 radial umschlossen ist.

Zurückkommend zur Ausgangsnabe 58 der abtriebsseitigen Wandung 54 der antriebsseitigen Kupplungseinheit 5 nimmt diese axial zwischen sich und der Baueinheit 20, also der Eingangsnabe 48 mittels jeweils einer Axiallagerung 60, 61 eine Zwischennabe 62 auf, die mittels einer Verzahnung 63 mit einem in Fig. 1 dargestellten Abtrieb 7, wie beispielsweise einer Getriebeeingangswelle, drehfest verbunden ist. Die Zwischennabe 62 ist, wie Fig. 2 weiter zeigt, mit einer nach radial außen geführten abtriebsseitigen Kupplungseinheit 6 drehfest verbunden, die über eine Verzahnung 64 abtriebsseitige Kupplungselemente 51 der abtriebsseitigen Kupplungseinheit 6 drehfest aufnimmt. Diese abtriebsseitigen Kupplungselemente 51 verfügen über Reibflächen, die, wie nachfolgend noch gezeigt werden soll, in Einrückposition der Kupplungseinrichtung 4 mit Reibflächen der antriebsseitigen Kupplungselemente 50 in Wirkverbindung gebracht werden können, während sie in Ausrückposition der Kupplungseinrichtung 4 von den Reibflächen der antriebsseitigen Kupplungselemente 50 getrennt sind.

Die bereits erwähnte Anpresseinrichtung 8 erstreckt sich zur Bildung eines Beaufschlagungsbereiches 65 für die Kupplungselemente 50, 51 mit einem Axialvorsprung 102 zumindest im Wesentlichen axial in Richtung zu den Kupplungselementen 50, 51. Dieser Axialvorsprung 102 umschließt die Trennwandung 13 unter Zwischenanordnung einer Abdichtung 101 radial. Zur Aufnahme der Abdichtung 101 weist die Trennwandung 13 an ihrem dem Axialvorsprung 102 der Anpresseinrichtung 8 zugewandten radial äußeren Ende eine Ausnehmung 104 auf, die zur Aufnahme der Abdichtung 101 dient. Auch der Axialvorsprung 102 der Anpresseinrichtung 8 weist eine Ausnehmung 106 zur Aufnahme einer Abdichtung 108 auf, und zwar an seiner der Axialerstreckung 52 der antriebsseitigen Wandung 53 des Gehäuses 3 der Kupplungsanordnung 1 zugeordneten Seite. Die Abdichtung 108 bildet eine erste Abdichtung und die Abdichtung 101 eine zweite Abdichtung.

Die Anpresseinrichtung 8 nimmt axial zwischen sich und den Kupplungselementen 50 und 51 eine Axialanpressfeder 66 auf. Die radiale Innenseite des Beaufschlagungsbereichs 65 dient als Führungsbereich 68 für eine Trennwandung 13. Die Trennwandung 13 ist radial innen an der Baueinheit 20 mittels einer Verzahnung 69 drehfest, aber axial verschiebbar aufgenommen. Der für die Trennwandung 13 gegenüber der Baueinheit 20 zugelassene axiale Bewegungsbereich wird in Richtung zur Zwischennabe 62 durch einen an der Baueinheit 20 befestigten Anschlag 70 begrenzt. Eine Abdichtung des Fliehkraftausgleichsraumes 14 an dieser Stelle kann entweder durch ein nicht gezeigtes Dichtmittel oder durch eine Verschweißung der Trennwandung 13 mit dem Anschlag 70 erfolgen.

Die vom Anschlag 70 abgewandte Seite der Trennwandung 13 wird durch zumindest einen Axialenergiespeicher 35 axial beaufschlagt, der sich anderenends an der Anpresseinrichtung 8 abstützt, und der die Trennwandung 13 in von der Anpresseinrichtung 8 fortweisender Richtung axial beaufschlagt. Die Trennwandung 13 ist gegenüber dem Beaufschlagungsbereich 65 der Anpresseinrichtung 8 und der Baueinheit 20 zumindest soweit abgedichtet, dass ein eventueller Durchtritt von Druckmittel - bezogen auf die Gesamtfunktion - vernachlässigbar bleibt. Die Trennwandung 13 ist zur Aufnahme des jeweiligen Axialenergiespeichers 8 an ihrer vom Anschlag 70 abgewandten Seite mit jeweils einer Halterung 100 ausgebildet.

Axial zwischen der antriebsseitigen Wandung 53 der antriebsseitigen Kupplungseinheit 5 und der Anpresseinrichtung 8 ist ein Druckraum 12 vorgesehen, der zur Versorgung mit Druckmittel über eine erste Druckmittelleitung 71 und einen im Abtrieb 7 vorgesehenen Mittendurchgang 72 sowie einen damit verbundenen Radialübergang 73 (Fig. 1) und einen Durchtritt 74 zu einem Druckmittelvorrat 34 führt.

Weiterhin ist, wie Fig. 2 zeigt, axial zwischen der Anpresseinrichtung 8 und der Trennwandung 13 ein Fliehkraftausgleichsraum 14 vorgesehen, während die Kupplungselemente 50 und 51 in einem Torusraum 9 angeordnet sind. Der Torusraum 9 ist zum einen über wenigstens einen in der Baueinheit 20 vorgesehenen, mit einer Erstreckungsrichtung zumindest im Wesentlichen senkrecht zur Zentralachse 2 der Kupplungseinrichtung 4 verlaufenden Strömungskanal 75 mit dem Fliehkraftausgleichsraum 14 verbunden, und zum anderen über eine zweite Druckmittelleitung 77 über Kanäle 90 bis 93 mit einem Durchgang 19 (Fig. 1) in einem Gehäuseabschnitt 27 des Getriebes 25. Alternativ oder ergänzend zum Strömungskanal 75 kann gemäß Darstellung in Fig. 2 die Trennwandung 13 im radial inneren Bereich mit einer Blendenbohrung 87 ausgebildet sein, die sich zumindest im Wesentlichen axial erstreckt.

Der Zweck dieser Blendenbohrung 87 liegt darin, einen zwischen der Trennwandung 13 und dem Anschlag 70 verbleibenden Spalt 105, der als gewollte und daher definierte Undichtigkeit 107 bewertet werden kann, dann zu unterstützen, wenn der Spalt 105 für die gewünschte Zulaufmenge an Druckmittel aus dem Torusraum in den Fliehkraftausgleichsraum 14 zu eng sein sollte.

Der Fliehkraftausgleichsraum 14 ist weiterhin, wie Fig. 1 oder 2 zeigen, über wenigstens einen in der Baueinheit 20 vorgesehenen, mit einer Erstreckungsrichtung zumindest im Wesentlichen parallel zur Zentralachse 2 der Kupplungseinrichtung 4 verlaufenden Strömungskanal 76 mit einem Durchgang 18 in einem Gehäuseabschnitt 26 des Getriebes 25 verbunden. Der wenigstens eine Strömungskanal 75 und/oder die Blendenbohrung 87 sind Teil eines Druckmittelaustausches 15 für den Fliehkraftausgleichsraum 14, während der wenigstens eine Strömungskanal 76 Teil einer Druckmittelentlastung 16 für den Fliehkraftausgleichsraum 14 ist. Der dem Strömungskanal 76 und damit der Druckmittelentlastung 16 zugeordnete Durchgang 18 ist nachfolgend als erster Durchgang bezeichnet, und der Gehäuseabschnitt 26 des Getriebes 25, zu welchem der Strömungskanal 76 führt, als erster Gehäuseabschnitt. Ebenso ist der dem Strömungskanal 75 und/oder der Blendenbohrung 87und damit dem Druckmittelaustausch 15 zugeordnete Durchgang 19 nachfolgend als zweiter Durchgang bezeichnet, und der Gehäuseabschnitt 27 des Getriebes 25, zu welchem der Strömungskanal 75 und/oder die Blendenbohrung 87 führen, als zweiter Gehäuseabschnitt.

Bei Übertragung eines vom Antrieb 42 stammenden Drehmomentes über den Torsionsschwingungsdämpfer 38 an die Baueinheit 20 wird die antriebsseitige Kupplungseinheit 5 der Kupplungseinrichtung 4 zusammen mit dem Tilgermassenträger 83 des Tilgersystems 31 und dem Rotor 84 der Elektromaschine 32 in Drehung um die Zentralachse 2 versetzt, und zwar jeweils mit Antriebsdrehzahl. Dadurch wird Druckmittel, das durch das Gehäuse 3 der antriebsseitigen Kupplungseinheit 5 umschlossen wird, fliehkraftbedingt nach radial außen gefördert. Während allerdings im Torusraum 9 mit der abtriebsseitigen Kupplungseinheit 6 Bauteile enthalten sind, die aufgrund ihrer Verbindung mit dem Abtrieb 7 mit anderer Drehzahl, bei Zugbetrieb beispielsweise mit geringerer Drehzahl rotieren als Bauteile, die mit dem Antrieb 42 drehverbunden sind. Da neben den zuvor bereits genannten Bauteilen, also der Baueinheit 20 und der antriebsseitigen Kupplungseinheit 5, auch weitere Bauteile, wie die mit der antriebsseitigen Wandung 53 in Wirkverbindung stehende Anpresseinrichtung 8, welche über die Axialanpressfeder 66 mit dem benachbarten antriebsseitigen Kupplungselement 50 und über die Axialenergiespeichereinheit 35 mit der Trennwandung 13 in drehfester Verbindung steht, und auch die Trennwandung 13, die mit dem Bauteil 20 in drehfester Verbindung steht, jeweils zumindest im Wesentlichen mit Antriebsdrehzahl bewegt werden, herrschen im Sinn eines guten Fliehkraftausgleichs im Druckraum 12 vergleichbare Bedingungen wie im Fliehkraftausgleichsraum 14.

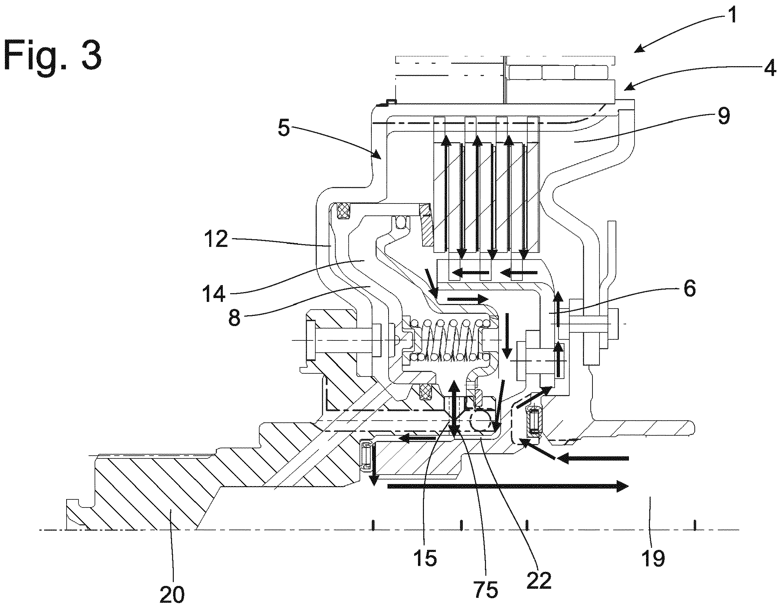

Die Befüllung des Fliehkraftausgleichsraums 14 erfolgt, wie Fig. 3 zeigt, zumindest im Wesentlichen aus dem Torusraum 9 über den Druckmittelaustausch 15. Da dem Torusraum 9 weiterhin der zweite Durchgang 19 über die zweite Druckmittelleitung 77 zugeordnet ist, wird der den Torusraum 9 verlassende Druckmittelstrom den Druckmittelaustausch 15 für den Fliehkraftausgleichsraum 14 zum einen und der zum zweiten Durchgang 19 führenden zweiten Druckmittelleitung 77 zum anderen zugeleitet. Die Aufteilung des den Torusraum 9 verlassenden Druckmittelstromes erfolgt hierbei entsprechend der Auslegung des Druckmittelaustauschs 15 für den Fliehkraftausgleichsraum 14. Ein größerer Durchflussquerschnitt des Druckmittelaustauschs 15 hat einen stärkeren Druckmittelstrom in den Fliehkraftausgleichsraum 14 zur Folge, ein geringerer Durchflussquerschnitt des Druckmittelaustauschs 15 dagegen einen stärkeren Druckmittelstrom über die zweite Druckmittelleitung 77 zum zweiten Durchgang 19.

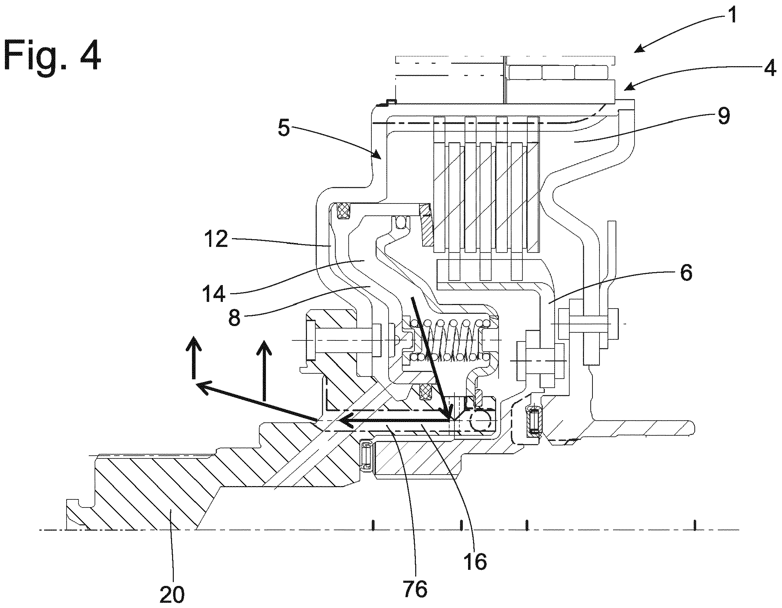

Ein über den Druckmittelaustausch 15 in den Fliehkraftausgleichsraum 14 eingeleiteter Druckmittelstrom wird sich bei Rotation der Kupplungseinrichtung 4 um die Zentralachse 2 fliehkraftbedingt nach radial außen verlagern, und hierbei Druckmittel, das bereits im Fliehkraftausgleichsraum 14 enthalten ist, nach radial innen verdrängen. Dort trifft das verdrängte Druckmittel auf die Druckmittelentlastung 16 für den Fliehkraftausgleichsraum 14, um gemäß Fig. 4 über diese Druckmittelentlastung 16 den Fliehkraftausgleichsraum 14 zu verlassen und dem ersten Durchgang 18 zuströmen zu können. Über den Druckmittelaustausch 15 in den Fliehkraftausgleichsraum 14 nachströmendes Druckmittel wird dadurch den Druck im Fliehkraftausgleichsraum 14 nur innerhalb eines begrenzten Bereiches beeinflussen können. Es herrschen demnach zumindest im Wesentlichen konstante vorbestimmte Druckbedingungen im Fliehkraftausgleichsraum 14.

Da der über den Druckmittelaustausch 15 in den Fliehkraftausgleichsraum 14 eingeleitete Druckmittelstrom sich bei Rotation der Kupplungseinrichtung 4 um die Zentralachse 2 fliehkraftbedingt nach radial außen verlagern wird, ist der Druckmittelaustausch 15 radial innerhalb des Fliehkraftausgleichsraumes 14 in der Baueinheit 20 vorgesehen. Da das bereits im Fliehkraftausgleichsraum 14 enthaltene Druckmittel durch den neu eingeleiteten Druckmittelstrom nach radial innen verdrängt wird, ist auch die Druckmittelentlastung 16 für den Fliehkraftausgleichsraum 14 in der Baueinheit 20 vorgesehen, und damit radial innerhalb des Fliehkraftausgleichsraumes 14, so dass das verdrängte Druckmittel möglichst umlenkungsfrei in die Druckmittelentlastung 16 eintreten kann.

Der Druckmittelaustausch 15 für den Fliehkraftausgleichsraum 14 ist in Relation zur Druckmittelentlastung 16 für den Fliehkraftausgleichsraum 14 mit geringerem Durchflussquerschnitt versehen. Dadurch ist auch bei relativ starker Druckmittelströmung aus dem Torusraum 9 in den Fliehkraftausgleichsraum 14 sichergestellt, dass der im Fliehkraftausgleichsraum 14 herrschende Druck einen vorbestimmten Druck nicht übersteigt. Trotz des gegenüber dem Druckmittelaustausch 15 größeren Durchflussquerschnittes der Druckmittelentlastung 16 ist im Fliehkraftausgleichsraum 14 bei Rotation der Kupplungseinrichtung 4 um die Zentralachse 2 eine hinreichende Befüllung sichergestellt, da wegen der Fliehkraftwirkung lediglich dann Druckmittel nach radial innen verdrängt wird, wenn ein entsprechender Druckmittelüberschuss im Fliehkraftausgleichsraum 14 vorliegt.

Das Druckmittel kann nach Verlassen des Torusraums 9 und/oder des Fliehkraftausgleichsraums 14 einer weiteren Verwendung zugeführt werden. Hat Druckmittel beispielsweise den Fliehkraftausgleichsraum 14 über den ersten Durchgang 18 verlassen, dann kann es dem ersten Gehäuseabschnitt 26 des Getriebes 25 zugeführt werden, um dort zur Schmierung und/oder zur Kühlung von Komponenten des Antriebsstranges 37, wie beispielsweise des Tilgersystems 31 und/oder der Elektromaschine 32 genutzt zu werden. Ebenso kann das den zweiten Durchgang 19 verlassende Druckmittel dem zweiten Gehäuseabschnitt 27 des Getriebes 25 zugeführt werden, um dort über den Durchtritt 74 zur Kühlung in den Wärmetauscher 33 oder in den Druckmittelvorrat 34 zu gelangen.

In ausgerücktem Zustand wird die Anpresseinrichtung 8 durch Anlegen eines Überdruckes im Fliehkraftausgleichsraum 14 gegenüber dem Druckraum 12 in von den Kupplungselementen 50 und 51 fortweisender Richtung verlagert. Die Anpresseinrichtung 8 ist dann mit ihrem Beaufschlagungsbereich 65 von den Kupplungselemente 50 und 51 gelöst. Die im Fliehkraftausgleichsraum 14 axial zwischen der Anpresseinrichtung 8 und der Trennwandung 13 wirksame Axialenergiespeichereinheit 38 unterstützt diese Ausrückbewegung, indem sie für eine sichere Abtrennung des Beaufschlagungsbereichs 65 der Anpresseinrichtung 8 von den Kupplungselementen 50 und 51 sorgt. Zwischen den Kupplungselementen 50 und 51 besteht dann kein Reibschluss, so dass reibungsbedingte Verluste ebenso wie Schleppverluste nachhaltig ausgeschlossen werden können.

In eingerücktem Zustand wird die Anpresseinrichtung 8 dagegen durch Anlegen eines Überdruckes im Druckraum 12 gegenüber dem Fliehkraftausgleichsraum 14 in Richtung zu den Kupplungselementen 50 und 51 verlagert. Die Anpresseinrichtung 8 beaufschlagt dann mit ihrem Beaufschlagungsbereich 65 die Kupplungselemente 50 und 51, die sich axial anderenends an der abtriebsseitigen Wandung 54 der antriebsseitigen Kupplungseinheit 5 abstützen. Zwischen den Kupplungselementen 50 und 51 besteht dann ein Reibschluss.

Abweichend von der bislang beschriebenen Ausführung kann die Befüllung des Fliehkraftausgleichsraums 14 zumindest im Wesentlichen über die dem zweiten Durchgang 19 zugeordnete zweite Druckmittelleitung 77 erfolgen, die, wie bereits erläutert, mit dem zweiten Gehäuseabschnitt 27 des Getriebes 25 und daher mit dem Druckmittelvorrat 34, gegebenenfalls auch mit einem Wärmetauscher 33, verbunden ist. Vom zweiten Durchgang 19 stammendes Druckmittel wird hierbei entsprechend der Auslegung des Druckmittelaustausches 15 in Relation zur zweiten Druckmittelleitung 77 zwischen Fliehkraftausgleichsraum 14 und Torusraum 9 verteilt. Ein größerer Durchflussquerschnitt des Druckmittelaustausches 15 hat einen stärkeren Druckmittelstrom zwischen Fliehkraftausgleichsraum 14 und Torusraum 9 zur Folge, ein geringerer Durchflussquerschnitt des Druckmittelaustausches 15 dagegen einen stärkeren Druckmittelstrom direkt zum Torusraum 9.

Ein vom zweiten Durchgang 19 über die zweite Druckmittelleitung 77 in den Fliehkraftausgleichsraum 14 eingeleiteter Druckmittelstrom wird sich bei Rotation der Kupplungseinrichtung 4 um die Zentralachse 2 fliehkraftbedingt nach radial außen verlagern, und hierbei Druckmittel, das bereits im Fliehkraftausgleichsraum 14 enthalten ist, nach radial innen verdrängen. Dort trifft das verdrängte Druckmittel sowohl auf den Druckmittelausgleich 15 als auch auf die Druckmittelentlastung 16 für den Fliehkraftausgleichsraum 14. Über den Druckmittelausgleich 15 gelangt ein Teil des im Fliehkraftausgleichsraum 14 vorgesehenen Druckmittels in den Torusraum 9, in welchem es fliehkraftbedingt nach radial außen, insbesondere zu den Kupplungselementen 50 und 51 gelangt, während ein anderer Teil des im Fliehkraftausgleichsraum 14 vorgesehenen Druckmittels über die Druckmittelentlastung 16 dem ersten Durchgang 18 zuströmen kann. Über den zweiten Durchgang 19 in den Fliehkraftausgleichsraum 14 nachströmendes Druckmittel wird dadurch den Druck im Fliehkraftausgleichsraum 14 nur innerhalb eines begrenzten Bereiches beeinflussen können. Es herrschen demnach zumindest im Wesentlichen konstante vorbestimmte Druckbedingungen im Fliehkraftausgleichsraum 14.

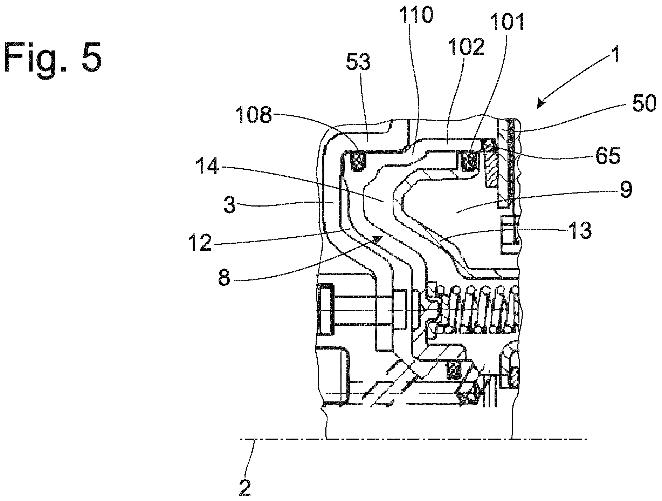

Wie bereits erwähnt, ist der Axialvorsprung 102 der Anpresseinrichtung 8 durch eine erste Abdichtung 108 gegenüber der antriebsseitigen Wandung 53 des Gehäuses 3 der Kupplungsanordnung 1 und durch eine zweite Abdichtung 101 gegenüber der Trennwandung 13 abgedichtet. Während die erste Abdichtung 108 allerdings radial zwischen der Axialerstreckung 52 des Kupplungsgehäuses 3 und dem Axialvorsprung 102 der Anpresseinrichtung 8 vorgesehen ist, und damit radial außerhalb der Anpresseinrichtung 8, ist die zweite Abdichtung 101 radial zwischen dem Axialvorsprung 102 der Anpresseinrichtung 8 und der Trennwandung 13 vorgesehen, und damit radial innerhalb der Anpresseinrichtung 8. Die Anpresseinrichtung 8 verfügt, wie Fig. 5 zeigt, axial zwischen den beiden Abdichtungen 108 und 101 über eine Radialstufe 110, die derart bemessen ist, dass die beiden Abdichtungen 108 und 101 zumindest im Wesentlichen auf gleichem radialen Abstand zur Zentralachse 2 liegen. Der Axialvorsprung 102 der Anpresseinrichtung 8 ist mit einem Beaufschlagungsbereich 65 ausgebildet, mit welchem er in Wirkverbindung mit dem benachbarten antriebsseitigen Kupplungselement 50 und über dieses auch mit den weiteren Kupplungselementen 51 und 50 (vgl. Fig. 2) gebracht werden kann.

Während der Verlagerung der Anpresseinrichtung 8 in ihre Ein- oder Auskuppelposition können im Torusraum 9 deutliche Druckschwankungen anliegen. Diese Druckschwankungen können aufgrund des Fliehkraftausgleichsraums 14 allerdings nur an derjenigen Fläche auf die Anpresseinrichtung 8 übertragen werden, die sich durch den Beaufschlagungsbereich 65 an dem Axialvorsprung 102 ergibt. Um auch diese Druckschwankungen wirksam ausschließen zu können, verfügt die Anpresseinrichtung 8 axial zwischen den beiden Abdichtungen 108 und 101 über die Radialstufe 110, die in Anpassung an den Materialquerschnitt der die Anpresseinrichtung 8 derart bemessen ist, dass die beiden Dichtungen 108 und 101 zumindest im Wesentlichen auf dem gleichen Radius gegenüber der Zentralachse 2 liegen, obwohl die eine Abdichtung 108 an der radialen Außenseite des Axialvorsprunges 102 der Anpresseinrichtung 8 und die andere Abdichtung 101 an der radialen Innenseite des Axialvorsprunges 102 der Anpresseinrichtung 8 liegt. Durch diese Ausgestaltung baut sich an der Radialstufe 110 ein Gegendruck zu dem Druck auf, der an dem Beaufschlagungsbereich 65 des dem Axialvorsprunges der Anpresseinrichtung 8 anliegt. Dadurch werden Druckschwankungen aus dem Torusraum 9 auch in diesem Bereich der Anpresseinrichtung 8 wirksam ausgefiltert.

### Bezugszeichen

- 1: Nasslaufende Kupplungsanordnung
- 2: Zentralachse
- 3: Gehäuse
- 4: Kupplungseinrichtung
- 5: antriebsseitige Kupplungseinheit
- 6: abtriebsseitige Kupplungseinheit
- 7: Abtrieb
- 8: Anpresseinrichtung
- 9: Torusraum
- 10: Gehäusewandung
- 12: Druckraum
- 13: Trennwandung
- 14: Fliehkraftausgleichsraum
- 15: Druckmittelaustausch für den Fliehkraftausgleichsraum
- 16: Druckmittelentlastung für den Fliehkraftausgleichsraum
- 18: erster Durchgang
- 19: zweiter Durchgang
- 20: Baueinheit
- 21: Gehäusenabe
- 22: Strömungskanal
- 23: Strömungskanal
- 24: Getriebegehäuse
- 25: Getriebe
- 26: erster Gehäuseabschnitt des Getriebes
- 27: zweiter Gehäuseabschnitt des Getriebes
- 30: Komponenten eines Antriebsstranges
- 31: Tilgersystem
- 32: Elektromaschine
- 33: Wärmetauscher
- 34: Druckmittelvorrat
- 35: Axialenergiespeichereinheit
- 37: Antriebsstrang
- 38: Torsionsschwingungsdämpfer
- 39: Trockenraum
- 40: Abtrennung
- 41: Nassraum
- 42: Antrieb
- 44: Eingangsteil Torsionsschwingungsdämpfer
- 45: Dämpfungseinrichtung Torsionsschwingungsdämpfer
- 46: Ausgangsteil Torsionsschwingungsdämpfer
- 47: Verzahnung
- 48: Eingangsnabe
- 50: antriebsseitige Kupplungselemente
- 51: abtriebsseitige Kupplungselemente
- 52: Axialerstreckung
- 53: antriebsseitige Wandung der Kupplungseinheit
- 54: abtriebsseitige Wandung der Kupplungseinheit
- 55: radial äußere Wandung der Kupplungseinheit
- 56: Verzahnung
- 58: Ausgangsnabe
- 60: Axiallagerung
- 61: Axiallagerung
- 62: Zwischennabe
- 63: Verzahnung
- 64: Verzahnung
- 65: Beaufschlagungsbereich Anpresseinrichtung
- 66: Axialfeder
- 67: Führungsbereich antriebsseitige Kupplungseinheit
- 68: Führungsbereich Anpresseinrichtung
- 69: Verzahnung
- 70: Anschlag
- 71: erste Druckmittelleitung
- 72: Mittendurchgang Abtrieb
- 73: Radialübergang
- 74: Austritt
- 75: Strömungskanäle
- 76: Strömungskanäle
- 77: zweite Druckmittelleitung
- 80: Tilgermassenträgerelement
- 81: Tilgermassenträgerelement
- 82: Tilgermassenträger
- 83: Tilgermassen
- 84: Rotor
- 85: Stator
- 87: Blendenbohrung
- 90: Kanal
- 91: Kanal
- 92: Kanal
- 93: Kanal
- 100: Halterung
- 101: erste Abdichtung
- 102: Axialvorsprung
- 104: Ausnehmung
- 106: Ausnehmung
- 108: Abdichtung
- 110: Radialstufe

## Patentansprüche

1. Getriebe (25) mit einem Getriebegehäuse (24) und einer nasslaufenden Kupplungsanordnung (1), umfassend eine um eine Zentralachse (2) drehbare Kupplungseinrichtung (4), die eine antriebsseitige Kupplungseinheit (5) mit zumindest einem antriebsseitigen Kupplungselement (50), eine mit einem Abtrieb drehfeste abtriebsseitige Kupplungseinheit (6) mit zumindest einem abtriebsseitigen Kupplungselement (51) und eine Anpresseinrichtung (8) aufweist, wobei die antriebsseitige Kupplungseinheit (5) einen zur Aufnahme der Kupplungselemente (50, 51) vorgesehenen Torusraum (9), einen zur Beaufschlagung einer Seite der Anpresseinrichtung (8) dienenden, durch zumindest eine Wandung (53) der antriebsseitigen Kupplungseinheit (5) und durch die Anpresseinrichtung (8) begrenzten Druckraum (12) und einen der Gegenseite der Anpresseinrichtung (8) zugeordneten und durch eine gegenüber dem Torusraum (9) wirksame Trennwandung (13) gebildeten Fliehkraftausgleichsraum (14) aufweist, und die Räume (9, 12, 14) zumindest im Wesentlichen gegeneinander abgedichtet sind, wobei die Kupplungsanordnung in dem Getriebegehäuse (24) des Getriebes (25) aufgenommen ist, und wobei ein Druckmittelaustausch (15) für den Fliehkraftausgleichsraum (14) den Fliehkraftausgleichsraum (14) mit dem Torusraum (9) verbindet, und eine Druckmittelentlastung (16) für den Fliehkraftausgleichsraum (14) den Fliehkraftausgleichsraum (14) mit einem ersten Durchgang (18) verbindet, während dem Torusraum (9) weiterhin ein zweiter Durchgang (19) zugeordnet ist, **dadurch gekennzeichnet, dass** der erste Durchgang (18) in einem ersten Gehäuseabschnitt (26) des Getriebes (25) mündet und zur Versorgung von Komponenten (30) eines Antriebsstranges (37) mit Druckmittel nutzbar ist, und dass als Komponenten (30) eines Antriebsstranges (37) wenigstens ein Tilgersystem (31) und/oder wenigstens eine Elektromaschine (32) vorgesehen sind.

2. Getriebe (25) nach Anspruch 1, **dadurch gekennzeichnet, dass** entsprechend der Auslegung des Druckmittelaustausches (15) für den Fliehkraftausgleichsraum (14) eine Druckmittelverteilung auf den Druckmittelaustausch (15) für den Fliehkraftausgleichsraum (14) zum einen und auf den zweiten Durchgang (19) zum anderen erfolgt.

3. Getriebe (25) nach Anspruch 1 mit einer gegenüber der antriebsseitigen Kupplungseinheit (5) drehfesten oder als Teil der antriebsseitigen Kupplungseinheit (5) vorgesehenen Baueinheit (20), die eine weitere Begrenzung des Fliehkraftausgleichsraumes (14) bildet, **dadurch gekennzeichnet, dass** die Baueinheit (20) sowohl von dem Druckmittelaustausch (15) als auch von der Druckmittelentlastung (16) durchdrungen ist.

4. Getriebe (25) nach Anspruch 3, **dadurch gekennzeichnet, dass** die Baueinheit (20) radial innerhalb des Fliehkraftausgleichsraumes (14) vorgesehen ist.

5. Getriebe (25) nach Anspruch 1, **dadurch gekennzeichnet, dass** der Druckmittelaustausch (15) für den Fliehkraftausgleichsraum (14) in Relation zur Druckmittelentlastung (16) für den Fliehkraftausgleichsraum (14) mit geringerem Durchflussquerschnitt versehen ist.

6. Getriebe (25) nach Anspruch 1 oder 5, **dadurch gekennzeichnet, dass** der Druckmittelaustausch (15) wenigstens einen Strömungskanal (75) mit einer Erstreckungsrichtung zumindest im Wesentlichen senkrecht zur Zentralachse (2) der Kupplungseinrichtung (4) und/oder wenigstens eine Blendenbohrung (87) mit einer Erstreckungsrichtung zumindest im Wesentlichen parallel zur Zentralachse (2) der Kupplungseinrichtung (4) aufweist, während die Druckmittelentlastung (16) wenigstens einen Strömungskanal (76) mit einer Erstreckungsrichtung zumindest im Wesentlichen parallel zur Zentralachse (2) der Kupplungseinrichtung (4) aufweist.

7. Getriebe (25) nach Anspruch 1, , **dadurch gekennzeichnet, dass** der zweite Durchgang (19) in einem zweiten Gehäuseabschnitt (27) des Getriebes (25) mündet, welchem ein Wärmetauscher (33) oder ein Druckmittelvorrat (34) zugeordnet ist.

8. Getriebe (25) nach Anspruch 1, **dadurch gekennzeichnet, dass** zumindest im Wesentlichen in Erstreckungsrichtung der Zentralachse (2) der Kupplungseinrichtung (4) zwischen der Anpresseinrichtung (8) und der Trennwandung (13) eine Axialenergiespeichereinheit (35) wirksam ist.

9. Getriebe (25) nach Anspruch 8, **dadurch gekennzeichnet, dass** die Trennwandung (13) über eine Halterung (100) zur Aufnahme der Axialenergiespeichereinheit (35) verfügt.

10. Getriebe (25) nach Anspruch 8 oder 9 mit einer Anpresseinrichtung (8), die einen zumindest im Wesentlichen axial verlaufenden, sich in Richtung zu den Kupplungselementen (50, 51) erstreckenden und einen Beaufschlagungsbereich (65) aufweisenden Axialvorsprung (102) umfasst, **dadurch gekennzeichnet, dass** der Axialvorsprung (102) die Trennwandung (13) zur Bildung des Fliehkraftausgleichsraums (14) unter Zwischenanordnung einer Abdichtung (101) radial umschließt.

11. Getriebe (25) nach Anspruch 10, **dadurch gekennzeichnet, dass** die Trennwandung (13) an ihrem dem Axialvorsprung (102) der Anpresseinrichtung (8) zugewandten radial äußeren Ende eine Ausnehmung (104) zur Aufnahme der Abdichtung (101) aufweist.

12. Getriebe (25) nach Anspruch 10 mit einer Anpresseinrichtung (8), die zur Bildung des Druckraums (12) mit einer gegenüber der Wandung (53) wirksamen ersten Abdichtung (108) radial außerhalb des Axialvorsprung (102) versehen ist, **dadurch gekennzeichnet, dass** die Anpresseinrichtung (8) im Erstreckungsbereich des Axialvorsprunges (102) über eine Radialstufe (110) und über einen Beaufschlagungsbereich (65) gegenüber den Kupplungselementen (50, 51) verfügt, wobei die Radialstufe (110) des Axialvorsprunges (102) sich axial zwischen den beiden Abdichtungen (108, 101) befindet und derart dimensioniert ist, dass ihre Wirkfläche zumindest im Wesentlichen der Wirkfläche des Beaufschlagungsbereiches (65) der Anpresseinrichtung (8) gegenüber den Kupplungselementen (50, 51) entspricht, wobei sowohl die Radialstufe (110) als auch der Beaufschlagungsbereich (65) jeweils innerhalb des Torusraums (9) angeordnet sind, und die beiden Abdichtungen (108, 101) sich zumindest im Wesentlichen auf gleichem Radius gegenüber der Zentralachse (2) befinden.

## Claims

1. Transmission (25) with a transmission housing (24) and a wet-running clutch arrangement (1), comprising a clutch device (4) which is rotatable about a central axis (2) and comprises a drive-side clutch unit (5) which has at least one drive-side clutch element (50), an output-side clutch unit (6) which is fixed to an output for conjoint rotation and has at least one output-side clutch element (51), and a pressing device (8), the drive-side clutch unit (5) comprising a toroidal space (9) which is provided for receiving the clutch elements (50, 51), a pressure space (12) which serves to load one side of the pressing device (8) and is delimited by way of at least one wall (53) of the drive-side clutch unit (5) and by way of the pressing device (8), and a centrifugal force compensation space (14) which is assigned to the opposite side of the pressing device (8) and is formed by way of a dividing wall (13) which is active with respect to the toroidal space (9), and the spaces (9, 12, 14) being sealed at least substantially with respect to one another, the clutch arrangement being received in the transmission housing (24) of the transmission (25), and a pressure medium interchange means (15) for the centrifugal force compensation space (14) connecting the centrifugal force compensation space (14) to the toroidal space (9), and a pressure medium relief means (16) for the centrifugal force compensation space (14) connecting the centrifugal force compensation space (14) to a first passage (18), while, furthermore, the toroidal space (9) is assigned a second passage (19), **characterized in that** the first passage (18) opens in a first housing portion (26) of the transmission (25) and can be utilized for the supply of components (30) of a drive train (37) with pressure medium, and **in that** at least one absorber system (31) and/or at least one electric machine (32) are/is provided as components (30) of a drive train (37).

2. Transmission (25) according to Claim 1, **characterized in that** a pressure medium distribution takes place, in accordance with the design of the pressure medium interchange means (15) for the centrifugal force compensation space (14), firstly to the pressure medium interchange means (15) for the centrifugal force compensation space (14) and secondly to the second passage (19).

3. Transmission (25) according to Claim 1 with a modular unit (20) which is fixed for conjoint rotation with respect to the drive-side clutch unit (5), or is provided as part of the drive-side clutch unit (5), and forms a further boundary of the centrifugal force compensation space (14), **characterized in that** the modular unit (20) is passed through both by the pressure medium interchange means (15) and by the pressure medium relief means (16).

4. Transmission (25) according to Claim 3, **characterized in that** the modular unit (20) is provided radially within the centrifugal force compensation space (14) .

5. Transmission (25) according to Claim 1, **characterized in that** the pressure medium interchange means (15) for the centrifugal force compensation space (14) is provided with a smaller throughflow cross section in relation to the pressure medium relief means (16) for the centrifugal force compensation space (14).

6. Transmission (25) according to Claim 1 or 5, **characterized in that** the pressure medium interchange means (15) comprises at least one flow duct (75) with a direction of extent at least substantially perpendicular with respect to the central axis (2) of the clutch device (4) and/or at least one orifice bore (87) with a direction of extent at least substantially parallel to the central axis (2) of the clutch device (4), whereas the pressure medium relief means (16) comprises at least one flow duct (76) with a direction of extent at least substantially parallel to the central axis (2) of the clutch device (4) .

7. Transmission (25) according to Claim 1, **characterized in that** the second passage (19) opens in a second housing portion (27) of the housing (25) which is assigned a heat exchanger (33) or a pressure medium supply (34).

8. Transmission (25) according to Claim 1, **characterized in that** an axial energy storage unit (35) is active at least substantially in the direction of extent of the central axis (2) of the clutch device (4) between the pressing device (8) and the dividing wall (13) .

9. Transmission (25) according to Claim 8, **characterized in that** the dividing wall (13) has a holding device (100) for receiving the axial energy storage unit (35).

10. Transmission (25) according to Claim 8 or 9 with a pressing device (8) which comprises an axial projection (102) which runs at least substantially axially, extends in the direction of the clutch elements (50, 51) and comprises a loading region (65), **characterized in that** the axial projection (102) radially encloses the dividing wall (13) in order to form the centrifugal force compensation space (14) with a seal (101) arranged in between.

11. Transmission (25) according to Claim 10, **characterized in that**, at its radially outer end which faces the axial projection (102) of the pressing device (8), the dividing wall (13) comprises a recess (104) for receiving the seal (101).

12. Transmission (25) according to Claim 10 with a pressing device (8) which, in order to form the pressure space (12), is provided radially outside the axial projection (102) with a first seal (108) which is active with respect to the wall (53), **characterized in that**, in the extent region of the axial projection (102), the pressing device (8) has a radial step (110) and a loading region (65) with respect to the clutch elements (50, 51), the radial step (110) of the axial projection (102) being situated axially between the two seals (108, 101) and being dimensioned in such a way that its active area corresponds at least substantially to the active area of the loading region (65) of the pressing device (8) with respect to the clutch elements (50, 51), both the radial step (110) and the loading region (65) being arranged in each case within the toroidal space (9), and the two seals (108, 101) being situated at least substantially on an identical radius with respect to the central axis (2) .

## Revendications

1. Transmission (25) comportant un carter de transmission (24) et un système d'embrayage humide (1), comprenant un dispositif d'embrayage (4) pouvant tourner autour d'un axe central (2), lequel dispositif d'embrayage présente une unité d'embrayage (5) côté entraînement dotée d'au moins un élément d'embrayage (50) côté entraînement, une unité d'embrayage (6) côté sortie solidaire en rotation d'une sortie et dotée d'au moins un élément d'embrayage (51) côté sortie et un dispositif de pression (8), l'unité d'embrayage (5) côté entraînement présentant une chambre toroïdale (9) prévue pour la réception des éléments d'embrayage (50, 51), une chambre de pression (12) servant à la sollicitation d'un côté du dispositif de pression (8) et limitée par au moins une paroi (53) de l'unité d'embrayage (5) côté entraînement et par le dispositif de pression (8) et une chambre de compensation de force centrifuge (14) associée au côté opposé du dispositif de pression (8) et formée par une paroi de séparation (13) active par rapport à la chambre toroïdale (9), et les chambres (9, 12, 14) étant au moins sensiblement étanches les unes par rapport aux autres, le système d'embrayage étant reçu dans le carter (24) de la transmission (25), et un échange de fluide sous pression (15) pour la chambre de compensation de force centrifuge (14) reliant la chambre de compensation de force centrifuge (14) à la chambre toroïdale (9), et une décharge de fluide sous pression (16) pour la chambre de compensation de force centrifuge (14) reliant la chambre de compensation de force centrifuge (14) à un premier passage (18), tandis qu'un deuxième passage (19) est associé en outre à la chambre toroïdale (9), **caractérisée en ce que** le premier passage (18) débouche dans une première partie de carter (26) de la transmission (25) et peut être utilisé pour l'alimentation en fluide sous pression de composants (30) d'une chaîne cinématique (37), et **en ce qu'**au moins un système d'amortissement (31) et/ou au moins une machine électrique (32) sont prévus en tant que composants (30) d'une chaîne cinématique (37).

2. Transmission (25) selon la revendication 1, **caractérisée en ce que** conformément à la conception de l'échange de fluide sous pression (15) pour la chambre de compensation de force centrifuge (14) une répartition de fluide sous pression s'effectue d'une part vers l'échange de fluide sous pression (15) pour la chambre de compensation de force centrifuge (14) et d'autre part vers le deuxième passage (19).

3. Transmission (25) selon la revendication 1, comportant une unité structurale (20) prévue de manière solidaire en rotation par rapport à l'unité d'embrayage (5) côté entraînement ou en tant que partie de l'unité d'embrayage (5) côté entraînement, laquelle unité structurale forme une limitation supplémentaire de la chambre de compensation de force centrifuge (14), **caractérisée en ce que** l'unité structurale (20) est traversée à la fois par l'échange de fluide sous pression (15) et par la décharge de fluide sous pression (16).

4. Transmission (25) selon la revendication 3, **caractérisée en ce que** l'unité structurale (20) est prévue radialement à l'intérieur de la chambre de compensation de force centrifuge (14).

5. Transmission (25) selon la revendication 1, **caractérisée en ce que** l'échange de fluide sous pression (15) pour la chambre de compensation de force centrifuge (14) est doté d'une section transversale d'écoulement plus petite que la décharge de fluide sous pression (16) pour la chambre de compensation de force centrifuge (14).

6. Transmission (25) selon la revendication 1 ou 5, **caractérisée en ce que** l'échange de fluide sous pression (15) présente au moins un canal d'écoulement (75) doté d'une direction d'étendue au moins sensiblement perpendiculaire à l'axe central (2) du dispositif d'embrayage (4) et/ou au moins un alésage de diaphragme (87) doté d'une direction d'étendue au moins sensiblement parallèle à l'axe central (2) du dispositif d'embrayage (4), tandis que la décharge de fluide sous pression (16) présente au moins un canal d'écoulement (76) doté d'une direction d'étendue au moins sensiblement parallèle à l'axe central (2) du dispositif d'embrayage (4).

7. Transmission (25) selon la revendication 1, **caractérisée en ce que** le deuxième passage (19) débouche dans une deuxième partie de carter (27) de la transmission (25), à laquelle un échangeur de chaleur (33) ou un réservoir de fluide sous pression (34) est associé.

8. Transmission (25) selon la revendication 1, **caractérisée en ce qu'**une unité d'accumulation d'énergie axiale (35) est active au moins sensiblement dans la direction d'étendue de l'axe central (2) du dispositif d'embrayage (4) entre le dispositif de pression (8) et la paroi de séparation (13).

9. Transmission (25) selon la revendication 8, **caractérisée en ce que** la paroi de séparation (13) possède un support (100) servant à la réception de l'unité d'accumulation d'énergie axiale (35).

10. Transmission (25) selon la revendication 8 ou 9, comportant un dispositif de pression (8) qui comprend une saillie axiale (102) s'étendant au moins sensiblement axialement, s'étendant en direction des éléments d'embrayage (50, 51) et présentant une région de sollicitation (65), **caractérisée en ce que** la saillie axiale (102) entoure radialement la paroi de séparation (13) pour la formation de la chambre de compensation de force centrifuge (14) avec interposition d'un joint d'étanchéité (101).

11. Transmission (25) selon la revendication 10, **caractérisée en ce que** la paroi de séparation (13) présente, à son extrémité radialement extérieure tournée vers la saillie axiale (102) du dispositif de pression (8), un évidement (104) servant à la réception du joint d'étanchéité (101).

12. Transmission (25) selon la revendication 10, comportant un dispositif de pression (8) qui, pour la formation de la chambre de pression (12), est doté d'un premier joint d'étanchéité (108) actif par rapport à la paroi (53) radialement à l'extérieur de la saillie axiale (102), **caractérisée en ce que** le dispositif de pression (8) possède, dans la région d'étendue de la saillie axiale (102), un gradin radial (110) et une région de sollicitation (65) par rapport aux éléments d'embrayage (50, 51), le gradin radial (110) de la saillie axiale (102) se trouvant axialement entre les deux joints d'étanchéité (108, 101) et étant dimensionné de telle sorte que sa surface active corresponde au moins sensiblement à la surface active de la région de sollicitation (65) du dispositif de pression (8) par rapport aux éléments d'embrayage (50, 51), à la fois le gradin radial (110) et la région de sollicitation (65) étant disposés respectivement à l'intérieur de la chambre toroïdale (9), et les deux joints d'étanchéité (108, 101) se trouvant au moins sensiblement sur le même rayon par rapport à l'axe central (2).
